# EUROPÄISCHE PATENTSCHRIFT

(11) **EP 0 747 606 B1**
(45) Veröffentlichungstag und Bekanntmachung des Hinweises auf die Patenterteilung: **14.06.2000**
(21) Anmeldenummer: 96111887.4
(22) Anmeldetag: 28.01.1992
(51) Int. Cl.: F16D 1/08

(54) **Verschluss zur Sicherung einer Kupplungshülse**
Fastening for securing a coupling sleeve
Serrure pour fixation d'un manchon d'accouplement

(30) Priorität: 27.02.1991 DE 4106096
(43) Veröffentlichungstag der Anmeldung: 11.12.1996
(62) Teilanmeldung aus: 92101323.1
(73) Patentinhaber: GKN Walterscheid GmbH, 53797 Lohmar (DE)
(72) Erfinder: Entrup, Hubert Grosse, 53797 Lohmar (DE); Konrad, Mathias, Dipl.-Ing., 86807 Buchloe (DE)
(74) Vertreter: Harwardt, Günther, Dipl.-Ing.

(56) Entgegenhaltungen:
- DE-C- 3 340 130
- US-A- 2 448 278
- US-A- 4 372 703
- US-A- 4 645 368

## Beschreibung

Die Erfindung betrifft einen Verschluß zur drehfesten und axialen Sicherung einer Kupplungshülse auf einer Zapfwelle eines Traktors oder auf einem Antriebszapfen eines Gerätes.

In der US-A-4645368 ist ein Schnellverschluß mit einer Kupplungshülse und einem Verschlußbolzen beschrieben. Die Kupplungshülse weist eine keilverzahnte Bohrung auf, mit welcher sie auf eine entsprechend keilverzahnte Welle aufschiebbar ist. Die Kupplungshülse besitzt eine quer zur Wellenachse verlaufende Bohrung, die zu einem Ende hin abgesetzt ist. Diese Bohrung schneidet die erstgenannte Bohrung. In die Bohrung ist ein Verschlußbolzen derart eingesetzt, daß er mit seinem einen Abschnitt in dieser geführt ist und mit seinem anderen dazu im Durchmesser abgesetzten Abschnitt aus der Kupplungshülse zur Betätigung herausragt. Ein Teil des in der Bohrung befindlichen Abschnittes dient zum Eingriff in eine Ringnut der keilverzahnten Welle, auf der die Kupplungshülse aufsitzt. Der Verschlußbolzen wird zum Eingriff durch eine Feder beaufschlagt, die sich einerseits an seinem in der Bohrung befindlichen Ende und andererseits an einem Verschlußstopfen abstützt, der in das im Durchmesser größere Ende der Bohrung eingeschraubt ist. Der nach außen ragende Abschnitt des Verschlußbolzens dient zur Betätigung von Hand. Durch Einwirkung von Hand kann der Verschlußbolzen gegen die Kraft der Feder nach innen verlagert werden und gerät damit außer Eingriff zur Ringnut. Die Verschlußkraft wird ausschließlich über die Feder erzeugt und kann nicht verändert werden. Der Widerstand der Feder kann nur so bemessen sein, daß eine Betätigung auch von Hand erfolgen kann.

In der DE-C-3340130 ist eine Wellenverbindung beschrieben, bei der ein verschwenkbarer Verschlußring vorgesehen ist, der auf der Kupplungshülse aufsitzt. In der Kupplungshülse ist eine Aussparung vorgesehen in der ein Keil radial beweglich geführt ist. In der Verschlußstellung liegt dem Keil eine Verschlußschraube gegenüber, die radial auf den Keil einwirkt, wodurch auch eine Kraft in Umfangsrichtung auf einen Keil der in der zentralen Bohrung der Kupplungshülse einsitzenden Zapfwelle ausgeübt wird, so daß in Umfangsrichtung das Spiel zwischen den Keilverzahnungen von Kupplungshülse und Zapfwelle aufgehoben wird.

Die oben beschriebenen Verschlüsse sind als Schnellverschlüsse gedacht. Sie sind daher mit Spiel und zwar in Axialrichtung und/oder in Drehmomentübertragungsrichtung behaftet. Beim Einsatz im Zusammenhang mit Geräten, bei denen in Dreh- und/oder Achsrichtung eine schwingende Beanspruchung für die Verbindung eintritt, kann das Ausschlagen des Zahnprofils oder der Verschlußelemente die Folge sein.

Der Erfindung liegt daher die Aufgabe zugrunde, einen Verschluß vorzuschlagen, der eine axial- und drehspielfreie Verbindung zwischen der Kupplungshülse und der Zapfwelle gewährleistet.

Diese Aufgabe wird erfindungsgemäß durch einen Verschluß gelöst, bei dem die Kupplungshülse eine Bohrung mit einer Vielkeilverzahnung aufweist und die Zapfwelle oder der Antriebszapfen mit einem korrespondierenden Vielkeilprofil und einer umlaufenden Ringnut versehen ist und eine zweite durchgehende Bohrung der Kupplungshülse zur Aufnahme eines Verschlußelementes rechtwinklig zur Längsachse angeordnet ist und die Ringnut schneidet, das in der zweiten Bohrung aufgenommene Verschlußelement mit mindestens einer Sperrfläche in die Ringnut eingreift und eine lösbare Verbindung zwischen Zapfwelle oder Antriebszapfen und Kupplungshülse bildet, das Verschlußelement aus einem Kopf mit einem Außengewinde und einer Schraub-bolzenverlängerung mit einem zylindrischen Führungsabschnitt und einem die Sperrfläche bildenden konischen, kegeligen oder kugeligen Abschnitt besteht, welcher zum Eingriff in die Ringnut bestimmt ist, die zweite Bohrung entsprechend teilweise als Gewindebohrung und teilweise dazu radial abgesetzt zylindrisch ausgebildet ist, der Kopf und die Schraubbolzenverlängerung über eine Feder gegeneinander abgestützt sind und der Kopf durch Einschrauben in die Gewindebohrung die Schraubbolzenverlängerung in die Ringnut drückt und bei in die Gewindebohrung der eingeschraubtem Kopf die Schraubbolzenverlängerung nicht aus der Ringnut lösbar ist.

Vorzugsweise weist der Kopf einen Innensechskant auf.

Das Verschlußelement stützt sich mit der Sperrfläche seiner Schraubbolzenverlängerung unmittelbar in der Ringnut der Zapfwelle ab, so daß die Zapfwelle über die Sperrfläche des Verschlußelementes mit der Kupplungshülse kraftschlüssig verbunden ist. Gleichzeitig wird eine drehspielfreie Verbindung durch ein Verspannen in der Ringnut erzielt und durch ein radiales Verlagern der Kupplungshülse gegenüber der Zapfwelle eine spielfreie Axialverspannung erreicht. Hierbei wird durch die radiale Verlagerung der Kupplungshülse die Zapfwelle mit ihrem Vielkeilprofil in die in der zweiten Bohrung befindliche Vielkeilverzahnung der Kupplungshülse gedrückt. Die Verbindung ist dadurch in beiden Drehrichtungen sprelfrei. Dies ist deshalb möglich, weil die Form der Vielkeilverzahnung so gestaltet ist, daß nur die Flanken ein Drehmoment übertragen. Ferner wird hierdurch eine Beanspruchung des Gewindes beim Lösen des Verschlusses vermieden. Durch die Abstützung des Kopfes gegenüber der Schraubbolzenverlängerung mittels einer Feder wird erreicht, daß im Falle eines Verschleisses der Verschlußelemente oder sich setzenden Teilen an der Zapfwelle bzw. an dem Antriebszapfen für eine gleichmäßige Tangentialkraft gesorgt ist.

Die Erfindung wird anhand des in den nachfolgenden Zeichnungsfiguren dargestellten Ausführungsbeispieles näher erläutert.

Es zeigt
- Fig. 1: einen Traktor mit angehängtem Gerät, welches über eine Gelenkwelle angetrieben wird,
- Fig. 2: eine Seitenansicht einer Zapfwelle bzw. eines Antriebszapfens der ersten Ausführungsform,
- Fig. 3: einen Schnitt durch die erfindungsgemäße Ausführungsform.

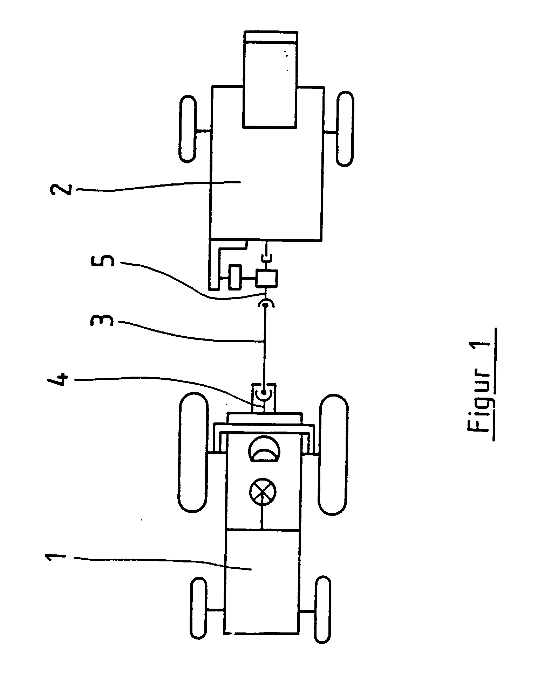

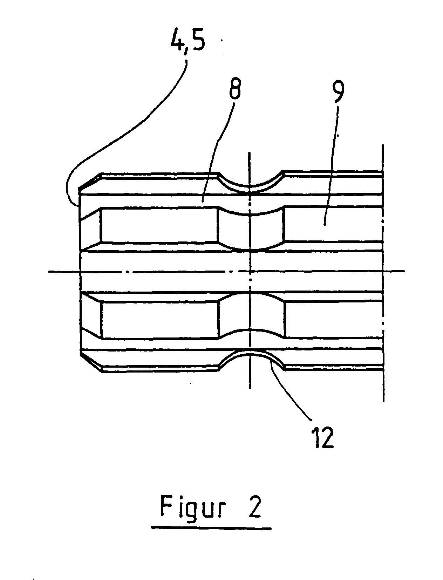

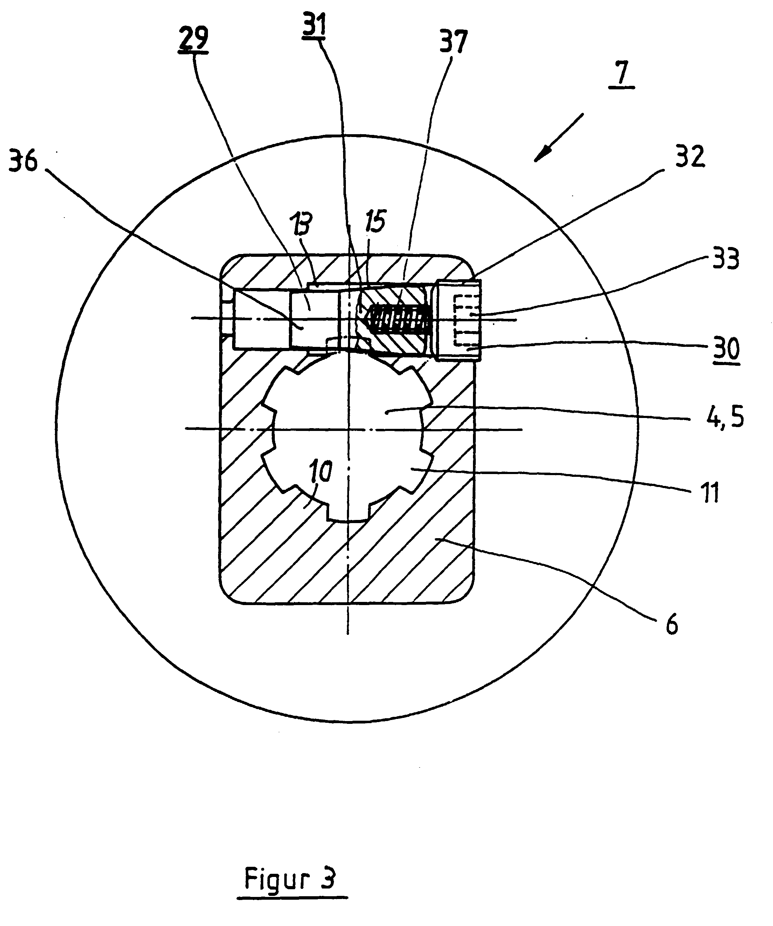

In Fig. 1 ist ein Traktor mit angehängtem Gerät 2 dargestellt, welches von dem Traktor 1 angetrieben wird. Zum Antrieb des Gerätes 2 ist eine Gelenkwelle 3 vorgesehen, welche mit einem Ende auf die Zapfwelle 4 des Traktors 1 aufgesteckt ist und mit dem zweiten Ende mit einem Antriebszapfen 5 des Gerätes 2 verbunden ist. Zur Verbindung der Gelenkwelle mit der Zapfwelle 4 und/oder dem Antriebszapfen 5 kann eine Kupplungshülse vorgesehen sein, die mit dem Verschluß ausgestattet ist, wie er im Zusammenhang mit Figur 3 näher beschrieben ist. In der Figur 3 ist der Verschluß 7 in der Verschlußstellung gezeigt. Die Zapfwelle 4 bzw. der Antriebszapfen 5 weisen entsprechend Figur 2 ein Vielkeilprofil 8 auf, welches aus mehreren umfangsverteilten Zähnen 9 besteht. Die Zapfwelle 4 bzw. der Antriebszapfen 5 weisen im Abstand zu ihrem Ende eine Ausnehmung in Form einer Ringrut 12 auf, welche umlaufend um die Zapfwelle 4 bzw. den Antriebszapfen 5 ausgestaltet und in die Zähne 9 eingeschnitten ist. Im Querschnitt gesehen stellt die Ausnehmung einen Kreisbogen dar.

Die Kupplungshülse 6 gemäß Figur 3 weist eine Vielkeilverzahnung 10 auf, welche zu den Zähnen 9 der Zapfwelle 4 korrespondierende Ausnehmungen 11 entsprechend der Anzahl der vorhandenen Zähne 9 aufweist.

Die Kupplungshülse 6 ist mit einer zweiten, abgesetzten Bohrung 13 versehen, welche zur Aufnahme des Verschlußelementes 29 vorgesehen ist. Die Bohrung 13 ist rechtwinklig zur Längsachse der Zapfwelle 4 und mit ihrer Wandung korrespondierend zum radialen Abstand der Ringnut 12 angordnet. Das Verschlußelement 29 greift mit einer Sperrfläche 15 in die Ringnut ein und bewirkt eine kraftschlüssige Verbindung zwischen der Kupplungshülse 6 und Zapfwelle 4 bzw. dem Antriebszapfen 5.

Figur 3 umfaßt die Schraubbolzenverlängerung 31 und den davon getrennten Kopf 30. Der Kopf 30 weist ein Außengewinde 32 und einen Innensechskant 33 auf. Die Schraubbolzenverlängerung 31 besteht im weiteren aus einem Führungsabschnitt 36 und einem kegeligen oder konischen Abschnitt. Der konische Abschnitt greift in die Ringnut der Zapfwelle 4 bzw. des Antriebszapfens 5 zur Verriegelung ein. Die Schraubbolzenverlängerung 31 ist über eine Feder 37 gegenüber dem Kopf 30 abgestützt. Hierdurch wird auch bei Verschleiß des Verschlusses 7 oder sich setzenden Teilen an der Zapfwelle 4 bzw. dem Antriebszapfen 5 für eine gleichmäßige Tangentialkraft gesorgt. Ein Festschrauben bzw. ein Lösen des Verschlußelementes 29 erfolgt durch ein Einschrauben des Kopfes 30 in die Bohrung 13 der Kupplungshülse 6, und die Schraubbolzenverlängerung 31 wird in die Ringnut zur kraftschlüssigen Verriegelung eingedrückt. Die Bohrung 13 der Kupplungshülse 6 weist zum Einschrauben des Kopfes 10 teilweise einen Gewindeabschnitt auf, während zum gegenüberliegenden Ende die Bohrung 13 mehrfach radial abgestuft ist. Zum Lösen der Verbindung zwischen der Kupplungshülse 6 und der Zapfwelle 4 bzw. dem Antriebszapfen 5 muß der Kopf 30 aus dem Gewindeabschnitt der Bohrung 13 herausgedreht werden, und durch das Einführen eines Dornes in das offene Ende der Bohrung 13 kann die Schraubbolzenverlängerung 31 herausgeschlagen werden.

### Bezugszeichenliste

- 1: Traktor
- 2: Gerät
- 3: Gelenkwelle
- 4: Zapfwelle
- 5: Antriebszapfen
- 6: Kupplungshülse
- 7: Verschluß
- 8: Vielkeilprofil der Zapfwelle
- 9: Zähne
- 10: Vielkeilverzahnung der Kupplungshülse
- 11: Ausnehmung
- 12: Ringnut
- 13: zweite Bohrung der Kupplungshülse
14
- 15: Sperrfläche
20
- 29: Verschlußelement
- 30: Kopf
- 31: Schraubbolzenverlängerung
- 32: Außengewinde
- 33: Innensechskant
34
35
- 36: Führungsabschnitt
- 37: Feder

## Patentansprüche

1. Verschluß (7) zur drehfesten und axialen Sicherung einer Kupplungshülse (6) auf einer Zapfwelle (4) eines Traktors (1) oder Antriebszapfen (5) eines Gerätes (2), bei dem
die Kupplungshülse (6) eine Bohrung mit einer Vielkeilverzahnung (10) aufweist und die Zapfwelle (4) oder der Antriebszapfen (5) mit einem korrespondierenden Vielkeilprofil (8) und einer umlaufenden Ringnut (12) versehen ist und eine zweite durchgehende Bohrung (13) der Kupplungshülse (6) zur Aufnahme eines Verschlußelementes (29) rechtwinklig zur Längsachse angeordnet ist und die Ringnut (12) schneidet,
das in der zweiten Bohrung (13) aufgenommene Verschlußelement (29) mit mindestens einer Sperrfläche (15) in die Ringnut (12) eingreift und eine lösbare Verbindung zwischen Zapfwelle (4) oder Antriebszapfen (5) und Kupplungshülse (6) bildet,
das Verschlußelement (29) aus einem Kopf (30) mit einem Außengewinde (32) und einer Schraubbolzenverlängerung (31) mit einem zylindrischen Führungsabschnitt (36) und einem die Sperrfläche (15) bildenden konischen, kegeligen oder kugeligen Abschnitt besteht, welcher zum Eingriff in die Ringnut (12) bestimmt ist,
die zweite Bohrung (13) entsprechend teilweise als Gewindebohrung und teilweise dazu radial abgesetzt zylindrisch ausgebildet ist,
der Kopf (30) und die Schraubbolzenverlängerung (31) über eine Feder (37) gegeneinander abgestützt sind, der Kopf (30) durch Einschrauben in die Gewindebohrung die Schraubbolzenverlängerung (31) in die Ringnut (12) drückt und
bei in die Gewindebohrung eingeschraubtem Kopf (30) die Schraubbolzenverlängerung (31) nicht aus der Ringnut (12) lösbar ist.

2. Verschluß nach Anspruch 1,
dadurch gekennzeichnet,
daß der Kopf (30) einen Innensechskant (33) aufweist.

## Claims

1. A lock (7) for axially securing a coupling sleeve in a rotationally fast way on a power take-off shaft (4) of a tractor (1) or on a driving journal (5) of an implement wherein the coupling sleeve (6) comprises a bore with multi-spline toothing (10) and wherein the power take-off shaft (4) or the driving journal (5) is provided with a corresponding multi-spline profile (8) and a continuous annular groove (12) and wherein a second through-bore (13) of the coupling sleeve (6) for receiving a locking element (29) is arranged at a right angle relative to the longitudinal axis and intersects the annular groove (12);
wherein the locking element (29) accommodated in the second bore (13) engages the annular groove (12) by means of at least one locking face (15) and forms a releasable connection between the power take-off shaft (4) or the driving journal (5) and the coupling sleeve (6);
wherein the locking element (29) consists of a head (30) with an outer thread (32) and a threaded pin extension (31) with a cylindrical guiding portion (36) and a conical, tapered or spherical portion which forms the locking face (15) and which is intended to engage the annular groove (12);
wherein, accordingly, the second bore (13) is partially provided in the form of a threaded bore, while being partially radially stepped relative thereto and being cylindrical;
wherein the head (30) and the threaded pin extension (31) are supported relative to one another by a spring (37);
wherein the head (30) by being threaded into the threaded bore, pushes the threaded pin extension (31) into the annular groove (12); and
wherein the threaded pin extension (31) cannot be disengaged from the annular groove (12) with the head (30) threaded into the threaded bore.

2. A lock according to claim 1,
characterised in
that the head (30) comprises an inner hexagon (33).

## Revendications

1. Système de blocage (7) garantissant la résistance à la torsion et aux sollicitations axiales d'un manchon d'accouplement (6) sur une prise de force (4) d'un tracteur (1) ou sur le tourillon d'entraînement (5) d'un appareil (2), dans lequel :
le manchon d'accouplement (6) présente un alésage (10) muni de plusieurs cannelures, et la prise de force (4) ou le tourillon d'entraînement (5) est muni d'un profil correspondant (8) avec plusieurs cannelures ainsi que d'une rainure périphérique (12) pour anneau de retenue ; et un second alésage (13), réalisé au travers du manchon d'accouplement (6) pour loger un élément de blocage (29), est disposé à angle droit par rapport à l'axe longitudinal et recoupe la rainure (12) pour anneau de retenue,
l'élément de blocage (29) logé dans le second alésage (13) vient en prise avec au moins une surface de blocage (15) dans la rainure (12) pour anneau de retenue et forme une connexion amovible entre la prise de force (4) ou le tourillon d'entraînement (5) et le manchon d'accouplement (6), l'élément de blocage (29) consistant en une tête (30) pourvue d'un filetage extérieur (32) et en un prolongateur en forme de boulon fileté (31) muni d'un tronçon de guidage cylindrique (36) et d'un tronçon conique, tronconique ou sphérique formant la surface de blocage (15), l'élément de blocage étant conçu pour venir en prise dans la rainure (12) pour anneau de retenue,
le second alésage correspondant (13) est formé en partie comme alésage taraudé et en partie comme alésage cylindrique radialement en retrait par rapport à celui-ci,
la tête (30) et le prolongateur en forme de boulon fileté (31) s'appuient l'un contre l'autre par l'intermédiaire d'un ressort (37),
la tête (30) pousse par vissage dans l'alésage taraudé le prolongateur en forme de boulon fileté (31) dans la rainure (12) pour anneau de retenue et, lorsque la tête (30) est vissée dans l'alésage fileté, le prolongateur en forme de boulon fileté (31) ne peut pas être libéré de la rainure (12) pour anneau de retenue.

2. Système de blocage selon la revendication 1, caractérisé en ce que la tête (30) présente une empreinte à six pans creuse (33).
